# EUROPEAN PATENT APPLICATION

(11) **EP 1 312 492 A2**
(43) Date of publication of application: **21.05.2003**
(21) Application number: 02257561.7
(22) Date of filing: 31.10.2002
(51) Int. Cl.: B60D 1/62, G06K 9/62

(54) **An identification unit for a tractor unit**

(30) Priority: 07.11.2001 GB 0126741
(71) Applicant: TMC Consultancy Ltd, Banbury, Oxfordshire OX16 9PA (GB)
(72) Inventor: Bure, Rudolf Arthur, Banbury, Oxfordshire OX16 9NR (GB)
(74) Representative: Stanley, Michael Gordon

(57) **Abstract**

An electrical identifying unit (IDU) (10) for a tractor/trailer combination in which the trailer has a tracking unit (31) thereon and the IDU (10) is used on the tractor unit, and an identification system including the IDU (10). The IDU (10) includes a microprocessor (11) having an ID code (12) programmed therein and which is connectable to the tracking unit (31) via the pre-installed existing tractor/trailer electrical wiring system (23,25) and the tracking unit (31) has a microprocessor (33) programmed to interact with the IDU microprocessor (11).

## Description

### Field

This invention relates to an electronic identification unit for use on tractor units of tractor/ trailer combinations.

### Background of the invention

For logistical and security reasons there is an increasing desire by transport operators to equip vehicle trailers and semi-trailers with tracking units. These units typically comprise a GPS (Global Positioning Satellite ) System receiver to provide location information with date and time, and other vehicle parameter sensors . These units may be passive systems which log data for later retrieval, or may be active systems which include a terrestrial or satellite transmitter/receiver for the communicating data to a monitoring station for continual monitoring of the vehicle.

The transmitters can be programmed to provide status and location data at desired intervals or may be programmed to react to particular events such as coupling and uncoupling tractor units to a trailer, or opening and closing trailer doors or security locks.

Trailer units typically have no source of electrical power and when attached to a tractor the trailer electrical system is connected into the tractor electrical system which supplies a 24V dc electricity to the trailer through ISO standard connectors. When tracking units are fitted to trailers they often have their own 12V battery and a battery charger unit which can recharge the battery from the trailer electrical system during the time period that the tractor and trailer are interconnected.

It is known that although interconnected, the trailer does not always receive the 24V supply and such a situation may occur when not all the connections and/or connectors are properly interconnected and/or when the lights are not switched on. If the trailer is not receiving the 24V supply this may cause the tracking system battery to run out of power and/or not be recharged properly, which in turn may put the continuity of the tracking function in danger.

It is also known that not all trailers are fitted with an intelligent tracking unit and that not all trailers' electrical systems have connectors with spare connector pin(s) for additional applications. The applicants pending patent application PCT/GB01/03482 describes an electrical connector which utilises the spare pin as a sensor for indication of coupling of the two halves of a connector Also, it may be that the spare pin(s) on the trailer connector(s) is/are already used for other applications which means that it could cause problems if the tractor were fitted with a continuous 24V supply output on an existing spare pin which might be coupled to a trailer connector not prepared to receive 24V through that same matching (counter-) pin.

The present inventions seek to avoid the above problem and will only establish a continuous supply of 24V to the trailer when both the tractor and the trailer are suitably connected.

For logistical, efficiency and security reasons there is also an increasing interest for transport operators to know which trailer has been coupled to which tractor, or when applying a trailer tracking system, to which tractor the trailer has been coupled.

Many attempts to answer this requirement are based on RF technology, where a transponder or tag with a unique code is mounted to the trailer and a receiver is mounted to the tractor. This wireless solution has the disadvantage of being distance dependant. When the transmission range is to short, the tag ID may not being received, and when the range is too long, it may receive the IDs from the neighbouring trailers. Also, the information is then only received by a tractor mounted system, not by the trailer mounted system. However, such a RF system could be mounted the other way around, with the tag on the tractor and the receiver on the trailer but this would cause a significant power drain from the trailer system batteries and add significant cost to the trailer tracking system and would not at present be a commercially viable solution.

The present inventions seek to provide a low power consumption and low-cost tractor ID identification system.

### Statements of Invention

According to the present invention there is provided an electrical identifying unit (IDU) for a tractor of a tractor/trailer combination in which the trailer has a tracking unit thereon, wherein the IDU has an electrical power input connectable to a power source on the tractor, a power output connectable to an electrical connector, a microprocessor having an ID code therein and which is connected to a signal line, the signal line being connectable to the tracking unit via the tractor/trailer electrical wiring system.

Preferably,the unit further includes a first switch means connected to the microprocessor which on receipt of a signal from the tracking unit causes the first switch means to connect a power outlet on the tractor to the tracking unit on the trailer. The unit may further include a second switch means connected to the first switch means and which is operable to switch off power to the power outlet when no load is detected at said outlet.

The microprocessor may have inputs and/or outputs connected to various vehicle sensors and devices, including at least one of a trailer door open/closed sensor and a trailer temperature sensor, and devices including at least one of a driver operated alarm and a release for a trailer immobiliser.

According to a second aspect of the invention there is provided an electrical identification system for a tractor/trailer combination in which the trailer has a tracking unit thereon, and the tractor has an IDU in accordance with the present invention, the tracking unit and IDU being interconnected through the existing wiring system pre-installed on said tractor and trailer and wherein the tracking unit has a microprocessor programmed to interact with the IDU microprocessor.

The tractor and trailer wiring systems are interconnected through a standard connector of the type described in the present applicants application PCT/GB01/03482.

The tracking unit processor is programmed to send a 'Request for ID' signal from the trailer tracking unit to the tractor IDU, when the physical interconnection between tractor and trailer has been established via an electrical connector and the IDU will respond to the trailer tracking system with a unique Tractor ID code, pre-programmed on the IDU microprocessor, and registered by the trailer operator, possibly with other data such as the tractor operator and /or driver, and the trailer tracking unit will store and/or transmit said ID code.

The trailer tracking unit microprocessor may store the information for later retrieval or pass the information to its transmit receiver via e.g. a RS232 communication interface link, which in turn may transmit the tractor-ID information to the office for further data processing.

If the code is recognised the tracking unit will send a confirmation signal to the tractor IDU which on receipt a positive confirmation, will operate a first switch means to connect a power source, preferably 24V, in the tractor to the trailer tracking unit, preferably to supply power, in this case 24V, to a battery charger connected to a battery pack in the trailer tracking unit.

There is also provided a method of identifying a tractor coupled to a trailer of a tractor trailer combination wherein the trailer is provided with a tracking unit thereon, and the tractor is provided with an IDU in accordance with the present invention, the tracking unit and IDU being interconnected through the existing wiring system pre-installed on said tractor and trailer and wherein a signalling protocol using a restricted cycle is used to transmit data between the tracking unit and IDU over said existing wiring system which is also used for its original indented purpose.

Preferably the signalling protocol uses a restricted maximum voltage for transmitting data over the existing wiring system. The data may be protected by checksums to provide reliable data links in the noisy environment of a commercial vehicle electrical system. The data is preferably encrypted by a challenge-response algorithm using a different challenge value each time the data is exchanged.

Any identification code received from the IDU by the tracking unit may be stored and/or transmitted thereby to a tracking station.

If the tracking unit has received no response for a request for identification within a pre-set time, it may repeat the challenge. If then after a number of challenges there is no response from the IDU, the trailer tracking unit will generate a warning signal, preferably a special code, which can be identified as 'un-registered tractor ID'. This code is then stored and/or transmitted to the tracking station to indicate that the trailer has been coupled to a tractor that is not (yet) registered in the operator's administration. This could be theft or it could indicate an 'authorised' tractor not yet fitted with an IDU.

If the tracking unit has not received a recognisable tractor-ID, it has no guarantee that it will receive 24V charge to its batteries, and therefore it may then decide to go into a 'sleep-mode' to save battery power.

The IDU will only pass the 24V power supply to the tracking unit if and for as long as there is a load sensed on the supply cable to the trailer connector (this means that the trailer tracking system's battery charger is working and batteries get charged or the charger is in stand-by mode). This provision avoids any 24V power supply being switched to a tractor connector pin when there is no trailer connected or when a trailer connector is not attached to an appropriate trailer tracking system.

When a tractor fitted with an IDU is uncoupled from a trailer fitted with an appropriate tracking unit, the previously existing 24V supply will automatically be switched off as soon as the tractor is disconnected due to a lack of load sensed at the connection.

The above signalling process between trailer tracking unit and IDU is established over one of the tractor/trailer connectors as soon as the electrical interconnection takes place, and with using a guaranteed wire connection such as the brake-light circuit, for the transmitting of digital PPM modulated data from the trailer to the tractor and back, in a certain repeat cycle, preferably with short pulses on 10:1 duty cycle, with Ground to +12V DC amplitude, for only about 1 second after being coupled.

### Description of Drawings

The invention will be described by way of example and with reference to the accompanying drawings in which :
- Fig. 1: is a schematic drawing of a IDU unit according to the present invention,
- Fig. 2: is a schematic diagram showing the interconnections between an IDU and a tracking unit
- Fig. 3: is a flow chart showing the communication steps between the IDU and the tracking unit.

### Detailed Description of the Invention

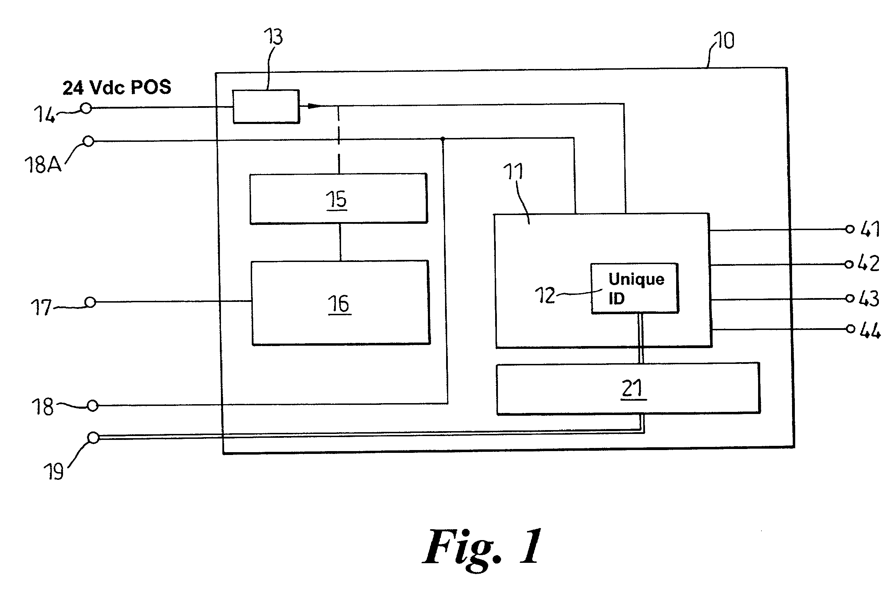

With reference to Fig.1 there is shown an IDU unit 10 according to the present invention and which comprises a programmable microprocessor 11 into which a unique identification code 12 is programmed. The microprocessor 11 is connected via a fuse 13 to a power input 14. The power input 14 is also connected via fuse 13 to a first switch means 15, inturn connected to a second switch means 16 which is connected to a power outlet 17. The microprocessor 11 is also connected to ground via outlets 18 and 18A and is connected to a signal outlet 19 via a rectifier 21. The microprocessor 11 may also be provided with a plurality of inputs and/or outputs 41-44 which are connectable to various vehicle condition sensors and other devices. Inputs 41, 42 may be connected to a trailer door open/closed sensor and a trailer temperature sensor, and outputs 43,44, may be connected to a release for a trailer immobiliser, and a driver alarm. The inputs/outputs 41-44 may be connected to other sensors and devices, and may comprise only input, only outputs, or combination of both as is desired.

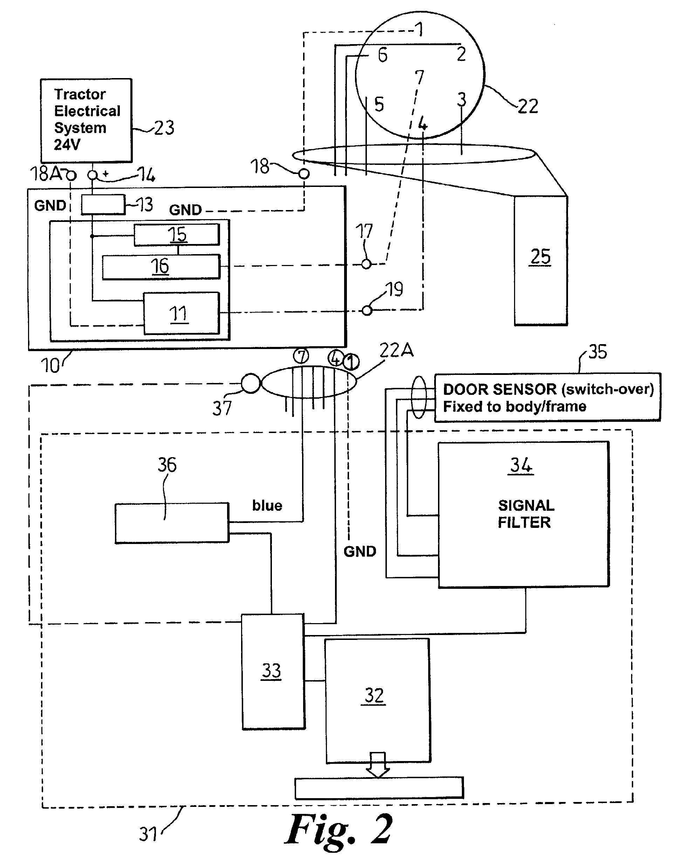

With reference now to Fig 2, the IDU 10 is connected through the tractor existing wiring to the tractor half of a ISO 1185 24N connector 22 having seven pins numbered 1-7. The microprocessor 11 is connected via outlet 19 and the stop light wiring to pin 4 of the connector 22. The switch means 15 and 16 are connected to power outlet 17 which is connected to a spare pin 7 of the connector 22. The power inlet 14 and ground connector 18A are connected into the tractor electrical system 23. The other ground connector 18 is connected to the pin 1 of the connector 22 via the existing ground wires in the tractor electrical system. The other existing wiring for the tractor electrical system 25 connects to pins 2, 3, 5, 6 which are respectively connected to left hand tail lights and direction indicators, and right hand tail lights and direction indicators.

The IDU 10 is connected to a tracking unit 31 mounted to a trailer. The unit 31 includes a microprocessor 33, a GPS receiver and mobile communication unit 32, a signal filter 34 which is connected to external sensors 35, and a power unit 36 which may include at least one rechargeable battery and charger(s). Details of some of these components may be found in PCT/GB01/02869. The connector 22 is coupled to its matching trailer half connector 22A so that the pins and sockets in each half match i.e pins and sockets of the same numbers interconnect.

The pin socket 7 in connector 22A feeds power to the power unit 36, the pin socket 1 is connected to a ground circuit within the tracking unit and pin socket 4 is connected to the microprocessor 33 as well as the trailer stop lights. The microprocessor 33 is also connected the signal filter 33, the radio and transmitter unit 32 the power supply 36 and a sensor 37 on the connector 22A to detect when the two halves 22 & 22A of the connector are coupled.

When a trailer is being connected, there will normally be no brake lights on during the time that the driver is out of the cab to make the connection. After the connection (24N plug into socket) the driver could go straight into his cab, put the brakes on before releasing the hand brakes, and drive off. The ID request and verification process between the IDU 10 and the tracking unit 31 therefor begins immediately after the sensor 37 has detected coupling, ideally within 3 to 4 seconds.

After ID verification has been successful, the 24V power source is switched through the first switch means 15. When there is a load on the circuit to the trailer tracking system (this means the battery charger is working and batteries get charged or in stand-by mode) then the 24V power is switched through the second switch means 16.

The microprocessor 11 in the IDU 10 also collects information via the inputs 41,42 and sends out operational signals via the outputs 43,44, and can for example be programmed to release the trailer immobiliser system only when the tractor code has been verified.

When the trailer is UNCOUPLED the switch means 16 detects that there is no load since the circuit is 'broken' and disconnects the power feed. This will avoid 24V power feed through pin 7 to any trailer not fitted with suitable coupling 22A.

The rectifier 21 should avoid a power feed from entering to the IDU 10 when the tractor driver operates the brakes.

The data signals between the IDU and tracking unit are sent along the existing installed wiring of the tractor and trailer and transfer data reliably and securely between the IDU and the Tractor Unit, over existing tractor-trailer interconnection wiring, with minimal effect on the normal operation of vehicle systems and other loads (normally lamps) operating on the same wiring connections.

To avoid interference with the operation of the existing vehicle circuits, the time duration, amplitude, and the duty cycle of the signalling pulses is kept to a minimum. Because the tractor wiring normally operates at 24V, the relatively low voltage amplitude of the signalling pulses produces reduced power dissipation in the connected loads. For example, if the signalling amplitude is 12 Volts, and the lamp loads are designed to operate at 24 Volts, the power dissipation in the loads is reduced by a factor of four compared to the normal rated power, (assuming, for the purpose of this approximation, that the loads are purely resistive and linear).

The effect on the vehicle lighting system is further reduced by the limited mark:space ratio of the signalling pulses which is no more than 1:10 (On:Off time ratio).

The Brake (Stop) circuit, used for signalling, is normally low (0 V Ground). If the vehicle brakes are applied, signalling is suspended until the brakes are released.

To provide reliable communications, a variable length packet data protocol is used to provide reliable signalling.

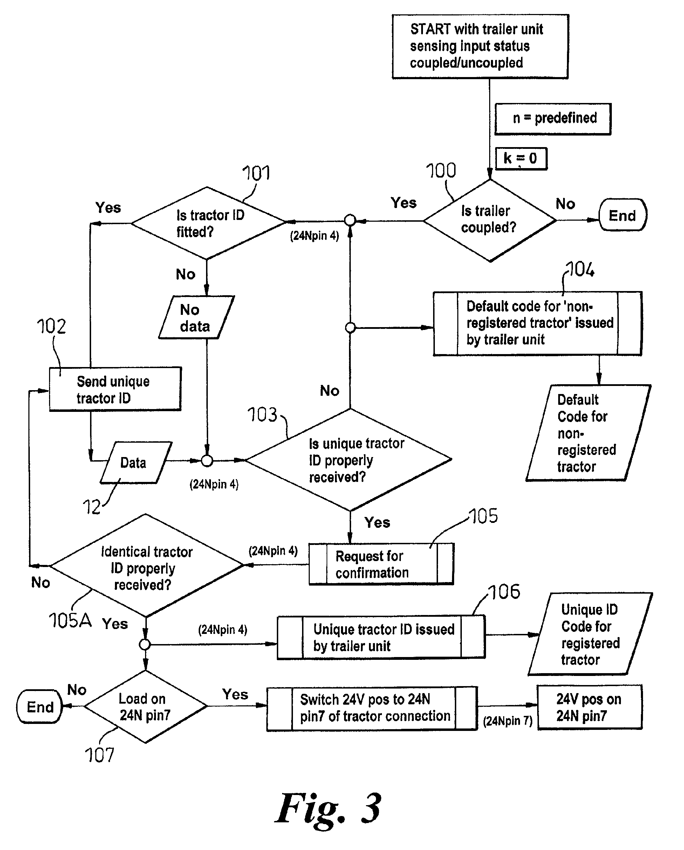

With reference also to Fig. 3, transmission is started by the microprocessor 33 in the trailer tracking unit 31 when it detects via sensor 37 that the tractor, Step 100, is coupled. In the communications between the Tracking Unit 31 and the IDU 10, the Trailer Unit 31 is always the Master, it initiates, and controls all communications.

The first communication sent is a synchronisation word modulated with alternate 1's and 0's. This is followed by the length byte, the command byte, and two checksum bytes. Some command bytes are further followed by a number of data bytes. The checksum is preferably a 16-bit Cyclic Redundancy Checksum generated by polynomial. Each data word is 8 bits (One Byte) in length and transmitted as a Low of 10mS followed by a high of 1mS, if the data bit is a 1, or with a low of 1mS if the data bit is a 0.

When a data packet is received, the receiving Unit (either the master or the slave) will check the CRC byte, and send back an acknowledge byte if the data packet is valid. If the sending unit does not receive the acknowledge signal, it will re transmit the entire data packet, a limited number of retries. After the number of retries, the communication will stop.

The processor 33 is programmed to send a 'Request for ID' signal from the trailer tracking unit 31 to the tractor IDU, Step 101. The IDU microprocessor 11 will respond to the trailer tracking system with a unique Tractor ID code 12 pre-programmed on the IDU microprocessor, Step 102. The tracking unit microprocessor 33 will either receive no code or the requested code at step 103. If no code, or a corrupted code is received then either the request for code is repeated or a default code for an unidentified tractor, Step 104 is issued. If a correct code is received by the microprocessor 33 and confirmed, step 105, and step 105A, then identifying code is stored and/or transmitted by the transmitter/receiver 32, step 106. Possibly other data such as the tractor operator, driver,location etc. may also be transmitted with said ID code. If the code is not confirmed the Id code request is repeated.

When the code is recognised the microprocessor 33 in the tracking unit will send a confirmation signal to the Tractor IDU 10 which on receipt of a positive confirmation, will operate the first and second switch means 15 & 16 to connect a power source 23 in the tractor to the trailer tracking unit, step 107, preferably to supply 24V charging power to a charger connected to the battery pack of the trailer tracking unit. If no load is detected by the second switch means 16 the power supply is switched off.

The Tractor ID code must be read from the IDU 10 to the trailer tracking unit for transmission by radio modem. To prevent this data being recorded, duplicated or easily retrieved by other means, an encryption system is used.

To simplify installation and/or where an auxiliary second tractor/trailer electrical connector is used a junction box may be used to interconnect the cables from the trailer connectors to the tracking unit.

## Claims

1. An electrical identifying unit (IDU) for a tractor/trailer combination in which the trailer has a tracking unit thereon, **characterised in that** the IDU (10) is a tractor IDU unit and has an electrical power input (14) connectable to a power source (23) on the tractor, a power output (17) connectable to an electrical connector (22) connectable to the trailer, a microprocessor (11) having an ID code (12) therein is connected to a signal line (19) which is connectable to the tracking unit (31) via the tractor/trailer electrical wiring system (23,25).

2. An IDU as claimed in Claim 1 **characterised in that** the unit (10) further includes a first switch means (15) connected to the microprocessor (11) which on receipt of a signal from the tracking unit (31) causes said first switch means (15) to connect a power outlet(7) on the tractor to the tracking unit (31) on the trailer.

3. An IDU as claimed in Claim 2 **characterised in that** the unit (10) further includes a second switch means (16) connected to the first switch means (15) and which is operable to switch off power to the power outlet (7) when no load is detected at the outlet (7).

4. An IDU as claimed in any one of Claims 1 to 3 **characterised by** the microprocessor 11 having further inputs (41,42) and/or outputs (43,44) connectable to various sensors and devices as is desired.

5. An electrical identification system for a tractor/trailer combination in which the trailer has a tracking unit (31) thereon, and the tractor has an IDU (10) in accordance with any one of Claims 1 to 4, the tracking unit (31) and IDU (10) being interconnected through the existing wiring system (23,25) pre-installed on said tractor and trailer and the tracking unit (31) having a microprocessor programmed (33) to interact with the IDU microprocessor (11).

6. A system as claimed in Claim 5 **characterised in that** the tracking unit (31) has its microprocessor (33) programmed to send a 'Request for ID' signal to the tractor IDU (10), when the physical interconnection between tractor and trailer has been established via an electrical connector (22), and the IDU (10) is programmed to respond to the trailer tracking unit (31) with a unique Tractor ID code (12), pre-programmed on the IDU microprocessor (11) and the trailer tracking unit (31) stores and/or transmits said ID code (12).

7. A system as claimed in Claim 6 **characterised in that** the tracker unit (31) is programmed to respond to a recognised code (12) by sending a confirmation signal to the Tractor IDU (10) which on receipt a positive confirmation, will operate switch means (15,16) to connect a power source (23) in the tractor to the trailer tracking unit (31).

8. A system as claimed in Claim 7 **characterised in that** switch means (16) in the IDU (10) sense electrical load in said supply and if NO load is sensed the switch means (16) terminate the power supply.

9. A system as claimed in any one of Claims 5 to 8 when dependant upon Claim 4, **characterised in that** the IDU microprocessor (11) is connected to vehicle sensors an devices as is desired

10. A method of identifying a tractor coupled to a trailer of a tractor trailer combination in which the trailer is provided with a tracking unit (31) thereon, and the tractor is provided with an IDU (10) in accordance with any one of Claims 1 to 4, further **characterised by** the tracking unit and IDU being interconnected through the existing wiring system (23,25) pre-installed on said tractor and trailer and wherein a signalling protocol using a restricted cycle is used to transmit data between the tracking unit (31) and IDU (10) over said existing wiring system (23,25) which is also used for its original intended purpose.

11. A method as claimed in Claim 10 in which the signalling protocol uses a restricted maximum voltage for transmitting data over existing wiring system.

12. A method as claimed in Claim 10 or Claim 11 **characterised in that** the data is encrypted by a challenge-response algorithm using a different challenge value each time the data is exchanged.

13. A method as claimed in any one of Claims 9 to 12 **characterised in that** the IDU (10) selectively switches power to the tracking unit (31) in response to signals received from the tracking unit (31).

14. A method as claimed in any one of Claims 9 to 13 **characterised in that** any identification code (12) received from the IDU (10) by the tracking unit (31) is transmitted thereby to a tracking station.

15. A method as claimed in any one of Claims 9 to 14, **characterised in that** in the event of No ID Code, or an incorrect ID code being received from the IDU , the tracking unit transmits a warning signal to a tracking station.

16. A method as claimed in any one of Claims 10-15, **characterised in that** in the event of a valid ID code (12) being received by the tracking unit (31), the switch means (15,16) connect the tractor power source (23) to the trailer tracking unit (31) and the microprocessor (11) is connected via the input/outputs (41-44) to various sensors and devices.
